Europäisches Patentamt

European Patent Office

Office européen des brevets

(11) Numéro de publication: **0 373 978**
**A1**

## DEMANDE DE BREVET EUROPEEN

(21) Numéro de dépôt: 89403014.7

(22) Date de dépôt: 02.11.89

(51) Int. Cl.5: **C08G 8/08, C09D 161/06, C09J 161/06**

(30) Priorité: 08.11.88 FR 8814535

(43) Date de publication de la demande:
20.06.90 Bulletin 90/25

(84) Etats contractants désignés:
ES GR

(71) Demandeur: CECA S.A.
22, Place des Vosges
F-92400 Courbevoie(FR)

(72) Inventeur: **Dreyfus, Thierry**
**11, Allée d'Olinval Domaine de Rimberlieu**
**F-60140 Villiers sur Coudun(FR)**
Inventeur: **Le Bourt, Noel**
**45, rue Hurtebise**
**F-60200 Compiègne(FR)**

(54) Dispersions de résols phénoliques à basse teneur en formol.

(57) On obtient des dispersions aqueuses stables de résols formophénoliques sans solvant et dont la teneur en formol libre est inférieure à 0,1% , par condensation de formaldéhyde et de phénols en présence d'un catalyseur, et mise en dispersion aqueuse in situ de la résine formée en présence d'un colloïde protecteur, le procédé comportant une addition d'ammoniac effectuée seulement après que la teneur en formaldéhyde libre évoluant au cours de la phase de condensation se soit stabilisée à une valeur constante.

EP 0 373 978 A1

## DISPERSIONS DE RESOLS PHENOLIQUES A BASSE TENEUR EN FORMOL

La présente invention a pour objet un nouveau procédé d'obtention de dispersions aqueuses stables de résols phénoliques sans solvant contenant moins de 0,1 % de formol libre.

## I - DOMAINE TECHNIQUE

L'utilisation des résines phénoliques en solution dans des solvants organiques est connue depuis très longtemps dans de nombreuses industries, et en particulier dans celles des colles et adhésifs et des peintures et vernis. Par exemple, l'utilisation de résols de paratertiobutylphénol pour l'amélioration des colles solvantées à base de polychloroprène ou de caoutchouc nitrile permet d'augmenter sensiblement la résistance à la chaleur et le pouvoir collant immédiat (le "tack") de ces colles de contact.

On tend de plus en plus à remplacer ces compositions solvantées par des produits en dispersion ou en émulsion aqueuse : en effet, la diminution ou mieux la suppression des solvants inflammables s'impose pour raisons de sécurité, et celle des solvants volatils en général pour des raisons de protection de l'environnement. Aussi a-t-on cherché depuis un certain temps à obtenir des résols phénoliques en dispersion aqueuse, utilisables seuls ou associés à des dispersions aqueuses d'élastomères.

Les mêmes motifs de sécurité et de protection de l'environnement s'appliquent au formol libre, produit toxique, dont le taux maximum admis par de nombreuses législations est inférieur à 0,1% pour les produits dispensés des marquages légaux indiquant la nocivité du produit. Ils conduisent à rechercher des compositions de résines à très bas taux de formol.

## II - TECHNIQUE ANTERIEURE

Pour obtenir des émulsions de résines phénoliques, trois types de procédés ont été utilisés.

Le plus anciennement connu consiste à préparer cette émulsion in situ. Pour ce faire, on condense en milieu aqueux un ou plusieurs phénols avec un aldéhyde (le plus courant étant le formaldéhyde) en présence d'un catalyseur. Lorsque le degré de condensation désiré est obtenu, on disperse le polymère à l'aide d'un agent tensioactif ou bien à l'aide d'un colloïde protecteur, ou encore avec une combinaison des deux sans jamais séparer la résine de son milieu aqueux. De nombreux brevets revendiquant cette méthode peuvent être cités; par exemple, le brevet US N° 1 976 433 (Bakelite Corporation) ou le brevet US N° 3 823 103 (Union Carbide Corporation), ou le brevet allemand DE 23 30852 (Reichhlold-Albert-Chemie AG). Ces procédés ne nécessitent pas de concentration et offrent l'avantage de la simplicité et d'un faible coût en énergie. Mais d'un autre côté, la teneur en formaldéhyde libre de l'émulsion reste notable, car même si l'on pousse très loin la condensation, la réaction du formaldéhyde n'est pas totale. On peut diminuer la teneur en formaldéhyde résiduel en abaissant son rapport moléculaire, mais alors on abaisse aussi la polarité de la résine et donc son activité. Et de toute façon, la teneur en formaldéhyde résiduel reste encore supérieure à 0,1 % , teneur que seule une concentration sous vide poussé peut ramener aux valeurs souhaitées.

Le deuxième procédé consiste à utiliser une résine phénolique solide, obtenue elle-même après concentration sous vide poussé. Cette résine est dissoute dans une quantité limitée de solvants organiques, la solution ainsi obtenue est dispersée sous agitation dans une solution aqueuse contenant un agent tensioactif, un colloïde protecteur, ou encore une combinaison des deux. Ce mode opératoire offre l'avantage de donner des émulsions à teneur en formol résiduel très faible, mais n'élimine pas complètement les solvants organiques. Il est aussi plus coûteux que le précédent, car il exige une concentration de la résine. Un tel procédé est décrit, par exemple, dans le brevet US N° 3 433 701 ou le brevet allemand DE 10 23882 (Farbwerke Hoechst AG), dans lequel on préconise l'utilisation de l'alcool polyvinylique comme colloïde protecteur ; du méthanol reste présent dans les résines et dans les dispersions.

La troisième méthode de mise en dispersion des résines phénoliques est décrite dans le brevet US N° 4 124 554 (Union Carbide Corporation). Pour la mise en dispersion des résines, on prépare une solution d'alcool polyvinylique dans un mélange d'eau et d'un solvant de couplage, on porte cette solution vers 55-75° C sous très forte agitation; en introduisant alors une résine phénolique solide en morceaux, en écailles, ou sous forme de poudre grossière, on provoque la formation d'une dispersion de résine. L'avantage de ce procédé réside dans l'utilisation d'une résine préformée dont la teneur en formaldéhyde résiduel est très faible (généralement inférieure à 0,1 %). En revanche, il existe des désavantages inhérents au procédé:

concentration préalable de la résine sous forme d'un produit solide avant la mise en dispersion ; exigence d'un moyen d'agitation très puissant (le brevet précité parle pour les réalisations de laboratoire de "WARRING BLENDER", qui est une turbine à très haute vitesse dont le mobile en forme de créneaux tourne au voisinage immédiat d'un statif de même forme, créant ainsi un cisaillement très important, et à l'échelle industrielle, d'un dissolveur de type "COWLES", mélangeur à haute vitesse pourvu d'un mobile qui est une turbine créant ici encore un cisaillement très puissant). Il s'agit donc d'un procédé coûteux en énergie. Un autre désavantage de ce procédé est de nécessiter un co-solvant organique miscible à l'eau à point d'ébullition compris entre 75 et 230°C. Les exemples du brevet (alcools, éthers de glycols, éthers, esters, cétones, etc...) montrent que pour une bonne application il faut au moins 15 % de co-solvant dans une dispersion, et compte tenu de ce que ces dispersions ont un sec d'environ 50 % , la teneur de la résine phénolique en co-solvant est au mieux de 30 % , ce qui est considéré maintenant comme excessif.

On voit bien qu'aucun des procédés actuellement connus ne permet la réalisation satisfaisante d'émulsions de résols à basse teneur en formol sans passer par l'étape contraignante de l'isolation de la résine sous une forme solide et de sa concentration avant la mise en dispersion.

L'utilisation de l'ammoniac comme catalyseur de synthèse des résines formophénoliques est bien connu ; en particulier, les mécanismes de réaction sont bien explicités aux pages 34 à 36 de l'ouvrage de KNOP & PILATO, "Phenolics resins" (SPRINGERVERLAG ed., 1985). On peut également utiliser, comme catalyseurs, des bases minérales telles que la soude, la potasse ou la baryte, ou des bases organiques de type amine tertiaire, ou encore une combinaison de bases minérales et de telles bases organiques.

## III - EXPOSE DE L'INVENTION

La demanderesse a constaté que si l'ammoniac était introduit au départ de la synthèse avec le catalyseur, la dispersion de résine obtenue présentait un taux de formaldéhyde résiduel important et que d'autre part, la dispersion finale n'était pas stable et que la résine décantait. Mais que de façon surprenante, si au cours de la synthèse de résols phénoliques on ajoutait de faibles quantités d'ammoniac, ou d'une amine aliphatique primaire ou secondaire, ou d'une mono- ou di-alcanolamine au milieu réactionnel, on obtenait une dispersion finale stable dont la teneur en formaldéhyde résiduel était abaissée à moins de 0,1 % . Cette constatation surprenante a été mise à profit dans la présente invention d'un procédé pour l'obtention de dispersions aqueuses de résines formophénoliques de type résol, les résines dispersées de ces dispersions ne contenant pas de solvant organique et ayant une teneur en formaldéhyde libre inférieure à 0,1% , ce procédé comportant la condensation de formaldéhyde et de phénols en présence d'un catalyseur, la mise en dispersion aqueuse in situ de la résine formée, après addition d'une solution aqueuse d'un colloïde protecteur, avec addition d'ammoniac ou d'amine effectuée seulement après que la teneur en formaldéhyde libre évoluant au cours de la phase de condensation se soit stabilisée à une valeur constante.

## IV - MANIERES DE REALISER L'INVENTION

L'introduction de l'ammoniac ou des amines doit être faite, soit pendant le cours de la condensation, ou encore soit pendant, soit après la mise en dispersion de la résine. Lorsqu'on introduit l'ammoniac ou les amines au cours de la condensation, il faut attendre l'instant où le taux de formaldéhyde libre devient constant. On constate en effet que le taux de formaldéhyde décroît rapidement au cours de la condensation pour atteindre une valeur limite, et si on introduit l'ammoniac ou les amines trop tôt, on va devoir en utiliser des quantités trop importantes, avec le risque d'aboutir à une dispersion instable. La vitesse de disparition du formaldéhyde libre dépend évidemment des conditions de synthèse (taux et nature du catalyseur, température de la synthèse) ; de même, la valeur limite du taux de formaldéhyde libre dans la résine dépend du rapport molaire aldéhyde/phénol, ainsi que des conditions de la réaction. L'homme de l'art peut rapidement définir ces valeurs en réalisant des synthèses d'essai et en suivant la teneur en formaldéhyde libre par dosages selon des méthodes connues, notamment dosage par le chlorhydrate d'hydroxylamine ou par l'acide chromotropique. La quantité d'ammoniac ou d'amine à introduire dépend du taux de formaldéhyde libre à cet instant, ou plus précisément du rapport molaire ammoniac-amine/formol libre, qui doit être compris entre 0,5 et 3, un rapport molaire de 0,7-0,9 étant préféré. Une quantité plus élevée d'ammoniac ou d'amine peut être utilisée, avec pour seule conséquence une présence d'ammoniac ou d'amine libre.

Les amines aliphatiques primaires ou secondaires qui, selon l'invention, sont introduites au cours de la synthèse des résols formophénoliques, sont pour raison de commodité, des amines à chaînes relativement courtes, comme par exemple la butylamine. En fait, toute mono- ou di-alkylamine est utilisable, sous

3

réserve d'une solubilité suffisante dans le milieu réactionnel. Il en est de même des mono- ou di-alcanolamines; on préfère cependant la monoéthanolamine ou la diéthanolamine.

Les phénols utilisables dans le procédé selon l'invention, sont des phénols substitués ou non, tels que phénol ordinaire, les crésols, le bisphénol A, le bisphénol F, le paratertiobutylphénol, le paratertiooctylphénol, le nonylphénol, le paraphénylphénol, etc..., cette liste étant donnée à titre indicatif et n'étant donc pas limitative.

Comme aldéhyde, on peut utiliser le formaldéhyde en solution aqueuse, ou des produits qui génèrent in situ du formaldéhyde. Le rapport molaire formaldéhyde/phénol doit être tel que la résine formée soit du type résol, c'est-à-dire thermoréactive (rapport en général supérieur à 1). Les structures correspondantes sont bien connues et décrites dans la littérature (voir par exemple le livre précité de KNOP & PILATO). Ce sont notamment des méthylols terminaux et des ponts éthers CH2-O-CH2 entre deux noyaux phénoliques. Si on utilise des phénols dont la fonctionnalité est supérieure à 2, on vérifiera le caractère thermoréactif de la résine, par exemple, en mesurant son temps de réticulation sur plaque à 150°C.

Comme catalyseur de synthèse, on peut utiliser une base organique, de type amine tertiaire. Ces catalyseurs sont bien connus de l'homme de l'art, mais leur odeur peut être gênante. On leur préfère des bases inorganiques comme la soude.

La condensation de la résine phénolique peut être réalisée à toute température telle que la vitesse de condensation soit suffisante; en général on opère entre 80°C et la température de reflux.

Pour la mise en dispersion, on utilise des colloïdes protecteurs tels que l'alcool polyvinylique, les dérivés cellulosiques, la caséine, les gommes saccharides. On préfère l'alcool polyvinylique. On peut aussi ajouter à titre optionnel des tensioactifs non-ioniques, parmi lesquels on peut citer de façon non limitative le nonylphénol éthoxylé à 9 moles d'oxyde d'éthylène. La mise en dispersion se fait très simplement par addition à la résine et sous agitation, du colloïde protecteur sous forme de solution aqueuse. On opère généralement vers 80°C. La température de mise en dispersion n'est pas critique: il faut simplement veiller à ce qu'à cette température, la résine ne soit pas trop visqueuse. Il n'est pas nécessaire d'avoir une agitation puissante pour la mise en dispersion : en laboratoire un agitateur à ancre simple est suffisant. Les dispersions peuvent être obtenues avec des teneurs en sec d'environ 50 % et néanmoins des viscosités suffisamment faibles (100 à 10000 mPa.s) pour pouvoir être utilisées telles quelles, par exemple dans une colle. On atteint ainsi des diamètres de particules de résines compris entre 0,2 et plusieurs micromètres, qui sont évidemment fonction des conditions de mise en dispersion et notamment de la nature et de la concentration des colloïdes protecteurs et tensioactifs utilisés.

Le procédé selon l'invention ne nécessite pas l'utilisation de solvant organique de la résine. Mais pour certaines applications, on peut être amené à envisager l'emploi de solvants organiques hydrosolubles. C'est par exemple le cas des dispersions qui doivent présenter une bonne résistance au gel. Un tel résultat peut être atteint grâce à des solvants organiques tels que l'éther de glycol, le glycol-ester de glycol, ou simplement l'alcool. Ces solvants hydrosolubles peuvent être introduits avant ou après la mise en dispersion, sans que cela modifie sensiblement les autres caractéristiques des dispersions obtenues.


EXEMPLES

Dans tous les exemples qui suivent, les émulsions ou dispersions de résines ont été caractérisées par:
- leur extrait sec, exprimé en poids pour cent de matière sèche, mesuré à partir de 1 gramme de dispersion porté pendant trois heures a 135°C (norme AFNOR T 51-424);
- leur viscosité mesurée à température de 23°C, à l'aide d'un viscosimètre Brookfield RVF, et exprimée en mPa.s (norme AFNOR T 51-210);
- leur teneur en formaldéhyde libre, mesurée soit selon la méthode au chlorhydrate d'hydroxylamine (norme AFNOR T 51-434), soit selon la méthode à l'acide chromotropique (norme DIN 54381), et exprimée en poids pour cent;
- le diamètre des particules, mesuré à l'aide d'un granulomètre MALVERN "Mastersizer", et exprimé en micromètres.


EXEMPLE 1

Dans un ballon tricol muni d'un agitateur et d'un réfrigérant, on introduit sous agitation 1251,2 grammes d'une solution aqueuse à 50 % de formaldéhyde (20,85 moles), 876,3 grammes de bisphénol A (3,84 moles), 862,5 grammes de paratertiobutylphénol (5,75 moles). On porte le mélange à 60°C, puis on ajoute

4

54 grammes d'une solution aqueuse à 30 % de soude (0,40 moles). Une réaction exothermique se produit et la température augmente jusqu'à la mise spontanée sous reflux. Quand la réaction exothermique s'est calmée, on maintient au reflux par chauffage pendant 20 minutes, puis on ajoute doucement 185,5 grammes d'une solution aqueuse à 21,6 % d'ammoniac (2,35 moles). On poursuit le reflux pendant 40 minutes (soit un reflux total de 60 minutes). On abandonne alors l'ensemble au refroidissement, et lorsqu'on est revenu vers 90°C, on introduit 21,9 grammes d'acide phosphorique à 85 % (0,19 moles) et 70,2 grammes d'un nonylphénol éthoxylé à 10 moles d'oxyde d'éthylène (0,12 moles). Vers 85°C, on ajoute 1248 grammes d'une solution aqueuse à 20 % en poids d'alcool polyvinylique (alcool polyvinylique dont le taux d'hydrolyse est de 88 % et dont une solution à 4 % a une viscosité de 4 mPa.s).

On maintient, par chauffage si nécessaire, la température vers 75-80°C pendant toute la durée de l'introduction de la solution d'alcool polyvinylique. Il se forme une masse hétérogène, qui est probablement une dispersion de résine du type eau dans l'huile, dispersion à laquelle on ajoute 667 grammes d'eau tout en maintenant la température vers 75-80°C. On coupe alors tout chauffage et on poursuit l'agitation pendant encore deux heures. A l'issue de cette période, la température est tombée à moins de 40°C et on peut dépoter la dispersion.

On obtient une dispersion de couleur crème très clair, dont les caractéristiques sont les suivantes :
Extrait sec : 47,6 %
Viscosité : 300 mPa.s
pH : 8
Formaldéhyde libre : 0,05 %
Diamètre des particules :0,7 μm

EXEMPLE 2 (exemple comparatif)

On opère comme dans l'exemple mais on n'introduit pas d'ammoniac. On obtient une dispersion blanche de résine dans l'eau dont les caractéristiques sont les suivantes :
Extrait sec :49 %
Viscosité : 900 mPa.s
pH : 6,5
Formaldéhyde libre : 1,7 %
Diamètre des particules : 1,2 μm

L'essai se compare à l'essai précédent. L'absence d'ammoniac se traduit ici par un relèvement sensible du formol libre.

EXEMPLE 3

Dans un ballon tricol muni d'un agitateur et d'un réfrigérant, on introduit sous agitation 1251,2 grammes d'une solution aqueuse à 50 % de formaldéhyde (20,85 moles), 876,3 grammes de bisphénol A (3,84 moles), 862,5 grammes de paratertiobutylphénol (5,75 moles). On porte à 60°C et on ajoute 54 grammes d'une solution aqueuse à 30 % de soude (0,40 moles). Une réaction exothermique se produit, qui provoque une élévation de température suivie de mise sous reflux. Quand la réaction exothermique s'est calmée, on maintient au reflux par chauffage pendant 60 minutes. Pendant toute la durée du reflux, on a suivi le formaldéhyde libre par dosage au chlorhydrate d'hydroxylamine, et obtenu les résultats suivants, les temps étant comptés à partir du moment du premier reflux:

| TEMPS | FORMALDEHYDE LIBRE | FORMALDEHYDE LIBRE |
|---|---|---|
| (MINUTES) | (%) | (MOLES) |
| AU CHARGEMENT | 20,55 | 20,85 |
| REFLUX | 9,6 | 9,75 |
| REFLUX + 10 | 3,7 | 3,75 |
| REFLUX + 20 | 3,0 | 3,05 |
| REFLUX + 30 | 2,9 | 2,95 |
| REFLUX + 40 | 2,85 | 2,9 |
| REFLUX + 50 | 2,8 | 2,85 |
| REFLUX + 60 | 2,85 | 2,9 |

On voit que le rapport molaire ammoniac/formaldéhyde libre avant l'addition d'ammoniac dans l'exemple 1 était de 0,77.

EXEMPLE 4

On a procédé ici comme dans l'exemple 1, sauf en ce qui concerne l'ammoniac que l'on a introduit dès le début de l'opération, en même temps que les phénols et le formaldéhyde. La dispersion obtenue a un taux de formol libre, mais elle ne présente aucune stabilité et s'est totalement séparée en moins de 24 heures.

EXEMPLE 5

On a procédé ici comme dans l'exemple 1, sauf en ce qui concerne le moment d'introduction de l'ammoniac. Le tableau ci-dessous rassemble des résultats obtenus avec introduction d'ammoniac au moment du premier reflux ($T_{NH3} = R + 0$), après 10 minutes de reflux ($T_{NH3} = R + 10$), après 20 minutes de reflux ($T_{NH3} = R + 20$) - cette valeur est reprise de l'exemple 1 -, après respectivement 40 et 60 minutes de reflux ($T_{NH3} = R + 40$ ; $T_{NH3} = R + 60$), au moment de l'introduction de l'alcool polyvinylique ($T_{NH3} = PV$), et au moment de l'introduction de l'eau de dispersion ($T_{NH3} = H20$) :

| $TNH3 = R^*$ | 0 | 10 | 20 | 40 | 60 | PV | $H_2O$ |
|---|---|---|---|---|---|---|---|
| Extrait sec (%) | | Emulsion | 47,6 | 48,1 | 47,6 | 46,5 | 47,5 |
| pH Viscosite mPa.s | Précipité | non stable | 8 300 | 8 350 | 7,8 350 | 7,4 270 | 7,8 450 |
| Diamètre ($\mu$m) | | | 0,07 | 0,85 | 0,65 | 0,95 | 0,85 |
| Formol libre (%) | 0,5 | 0,09 | 0,05 | 0,06 | 0,04 | 0,02 | 0,06 |

On constate que l'on n'obtient de résultat satisfaisant, c'est-à-dire des dispersions stables de résines à bas taux de formol libre, que si l'ammoniac est introduit après stabilisation du taux de formol libre sous reflux. Dans les conditions de ces essais, cette circonstance est réalisée après 20 minutes de reflux, et on s'en rend parfaitement compte par la constance du formol au niveau de 3 % (3 moles). L'introduction d'ammoniac au début de la réaction a pour résultat une émulsion de résine trop riche en formol libre, et qui sédimente en moins de 24 heures; l'introduction trop hâtive, après 10 minutes de reflux, donne une émulsion bas formol, mais sédimentant en moins de 24 heures.

EXEMPLE 6

On opère comme dans l'exemple 1, aux différences près que l'on charge 371 grammes d'une solution à 21,6 % d'ammoniac (4,71 moles) et que ce chargement est effectué 40 minutes après le début du reflux. Ici encore, et malgré un fort excès d'ammoniac, on obtient une dispersion très satisfaisante, avec les caractéristiques suivantes:

Extrait sec :45,9 %

Viscosité : 240 mPa.s

pH : 8,6

Formaldéhyde libre : 0,01 %

Diamètre des particules : 0,8 $\mu$m

Le rapport molaire ammoniac/formaldéhyde libre avant introduction de l'ammoniac était de 1,54.

## EXEMPLE 7 (contre-exemple)

On opère comme dans l'exemple 6, mais on charge 92,7 grammes d'une solution à 21,6 % d'ammoniac (1,18 mole) 40 minutes après le début du reflux. On obtient une dispersion dont les caractéristiques sont les suivantes:

Extrait sec : 48,9 %

Viscosité : 5000 mPa.s

pH : 7,1

Formaldéhyde libre : 0,8 %

Diamètre des particules : 1,1 $\mu$m

Le rapport molaire ammoniac/formaldéhyde libre avant introduction de l'ammoniac était de 0,385 : la quantité d'ammoniac était ici insuffisante pour abaisser la teneur en formol résiduel à moins de 0,1 %.

## EXEMPLE 8 (contre-exemple)

On opère comme dans l'exemple 1, à la différence que la solution d'ammoniac est introduite en plus forte quantité (614,5 grammes, soit 7,71 moles) dès le premier instant du reflux : on n'obtient pas d'émulsion, mais un précipité.

## EXEMPLE 9

Dans un ballon tricol muni d'un agitateur et d'un réfrigérant, on introduit sous agitation 873,6 grammes de solution aqueuse à 50 % de formaldéhyde (14,56 moles), 951,6 grammes de bisphénol A (4,17 moles), 936,5 grammes de p.tertiobutylphénol (6,24 moles). On porte à 60°C et on ajoute 54 grammes de solution aqueuse à 30 % de soude (0,40 moles). Une réaction exothermique se produit et la température augmente jusqu'à la mise sous reflux. On maintient à reflux pendant 40 minutes. On met en refroidissement et on ajoute vers 90°C, 75,5 grammes d'un nonylphénol éthoxylé à 10 moles d'oxyde d'éthylène (0,13 moles). La température étant revenue vers 85°C, on ajoute 1354 grammes de solution aqueuse à 20 % d'alcool polyvinylique (caractérisé par un taux d'hydrolyse de 88 % et une viscosité de sa solution à 4 % de 4 mPa.s). On maintient la température vers 75-80°C par chauffage durant toute l'introduction de la solution d'alcool polyvinylique. Il se forme une dispersion de résine du type huile dans eau. On charge alors 720 grammes d'eau en maintenant la température à 75-80°C, puis on laisse refroidir sous agitation pendant deux heures. La température étant maintenant retombée à 40°C, on peut dépoter la dispersion, dont les caractéristiques sont les suivantes :

Extrait sec : 48 %

Viscosité : 6900 mPa.s

pH : 8,5

Formaldéhyde libre : 0,25 %

Diamètre des particules : 0,9 $\mu$m

On remarque que même en abaissant fortement le rapport molaire formaldéhyde sur phénols, la teneur en formaldéhyde libre reste supérieure à 0,1 %.

## EXEMPLE 10

On opère comme dans l'exemple 7, mais on charge 50,2 grammes d'une solution aqueuse à 21,6 % d'ammoniac (0,64 mole) 20 minutes après le début du reflux. On obtient une dispersion dont les caractéristiques sont les suivantes :
Extrait sec : 49,9%
Viscosité : 5000 mPa.s
pH : 8
Formaldéhyde libre : 0,05 %

EXEMPLE 11 (contre-exemple)

Dans un ballon tricol muni d'un agitateur et d'un réfrigérant, on introduit sous agitation 600 grammes d'une solution aqueuse à 50 % de formaldéhyde (10 moles), 951,6 grammes de bisphénol A (4,17 moles), 936,5 grammes de paratertiobutylphénol (6,24 moles). On porte à 60°C et on ajoute 54 grammes d'une solution aqueuse à 30 % de soude (0,40 mole). Une réaction exothermique se développe et la température augmente jusqu'à la mise sous reflux. On maintient à reflux pendant 40 minutes, puis on refroidit vers 90°C. On ajoute alors 75,5 grammes d'un nonylphénol éthoxylé à 10 moles d'oxyde d'éthylène (0,13 mole). La température étant maintenue à environ 85°C, on ajoute 1224 grammes d'une solution aqueuse à 20 % d'alcool polyvinylique (cet alcool polyvinylique a un taux d'hydrolyse de 88 % et la viscosité de sa solution à 4 % est de 4 mPa.s). On maintient la température vers 75-80°C par chauffage pendant toute l'introduction de la solution d'alcool polyvinylique. Il se forme une dispersion de résine du type huile dans eau. On charge alors 840 grammes d'eau en maintenant toujours la température à 75-80°C, puis on laisse refroidir sous agitation durant deux heures. La température est à ce moment inférieure à 40°C. On dépote la dispersion qui se sépare en deux phases en moins de 24 heures.
On a travaillé ici avec un rapport molaire formaldéhyde/phénol inférieur à 1, rapport pour lequel les dispersions ne sont pas stables.

EXEMPLE 12

Dans cet exemple, la deuxième phase de la condensation a été menée en présence d'éthanolamine. Dans un ballon muni d'un agitateur et d'un réfrigérant, on introduit sous agitation 405 grammes d'une solution aqueuse à 50 % de formaldéhyde (6,75 moles), 283,5 grammes de bisphénol A (1,16 moles), 270 grammes de para-tertio-butyl-phénol (1,86 moles). On porte à 60°C et on ajoute 17,2 grammes d'une solution aqueuse à 30 % de soude (0,13 moles), un exotherme se produit et la température augmente jusqu'à la mise sous reflux. Quand l'exotherme se calme, on maintient au reflux par chauffage pendant 40 minutes, puis on ajoute doucement 60 grammes d'éthanol-amine (0,98 moles). On poursuit ensuite le reflux pendant 20 minutes (reflux total 60 minutes). On met en refroidissement et on ajoute vers 90°C, 7,5 grammes d'acide phosphorique à 85 % et 22,5 grammes d'un nonylphénol éthoxylé à 10 moles d'oxyde d'éthylène (0,04 moles). Vers 85°C, on ajoute 403,5 grammes d'une solution aqueuse à 20 % d'alcool polyvinylique (cet alcool polyvinylique est caractérisé par un taux d'hydrolyse de 88 %, et par la viscosité de sa solution aqueuse 4 % qui est de 4 mPa.s), on maintient la température vers 75-80°C par chauffage pendant toute l'introduction de la solution d'alcool polyvinylique. Il se forme une dispersion de résine de type huile dans l'eau. On laisse sous agitation deux heures en refroidissant. Au bout de ces deux heures, la température est inférieure à 40°C et on peut dépoter la dispersion. La dispersion obtenue est très légèrement colorée en crème; ses caractéristiques sont les suivantes :
Extrait sec (1 gramme pendant 3 heures à 135°C) : 60 %
Viscosité : 800 mPa.s
pH : 8
Formaldéhyde libre
- par dosage au chorhydrate d'hydroxylamine : néant
- par dosage à l'acide chromotropique : 0,05 %
Diamètre des particules : 0,9 micron

EXEMPLE 13

Dans cet exemple, la seconde phase de la condensation a été menée en présence d'une amine aliphatique, la butylamine. Dans une ballon tricol muni d'un agitateur et d'un réfrigérant, on introduit sous agitation 405 grammes d'une solution aqueuse à 50 % de formaldéhyde (6,75 moles), 283,5 grammes de bisphénol A (1,16 moles), 279 grammes de para-tertio-butyl-phénol (1,86 moles). On porte à 60°C et on ajoute 17,2 grammes d'une solution aqueuse à 30 % de soude (0,13 moles). Un exotherme se produit et la température augmente jusqu'a la mise sous reflux. Quand l'exotherme se calme, on maintient au reflux par chauffage pendant 40 minutes, puis on ajoute doucement 73 grammes de butylamine (0,98 moles). On poursuit ensuite le reflux pendant 20 minutes (reflux total 60 minutes). On met en refroidissement et on ajoute vers 90°C, 7,5 grammes d'acide phosphorique à 85 % et 22,5 grammes d'un nonylphénol éthoxylé à 10 moles d'oxyde d'éthylène (0,04 moles). Vers 85°C, on ajoute 403,5 grammes d'une solution aqueuse à 20 % d'alcool polyvinylique (cet alcool polyvinylique a un taux d'hydrolyse de 88 % et la viscosité de sa solution aqueuse à 4 % est de 4 mPa.s). On maintient la température vers 75-80°C par chauffage pendant toute l'introduction de la solution d'alcool polyvinylique. Il se forme une dispersion de type huile dans eau de la résine. On abandonne au refroidissement deux heures sous agitation. La température étant maintenant inférieure à 40°C, on peut dépoter la dispersion, qui a une légère couleur jaune, et dont les caractéristiques sont les suivantes :

Extrait sec (1 gramme pendant 3 heures à 135°C) : 60 %

Viscosité : 1000 mPa.s

pH : 8

Formaldéhyde libre

- par dosage au le chorhydrate d'hydroxylamine : néant.

- par dosage à l'acide chromotropique : 0,03 %

Diamètre des particules : 0,8 micron

## Revendications

1) Procédé pour l'obtention de dispersions aqueuses de résines formophénoliques de type résol, les résines dispersées de ces dispersions ne contenant pas de solvant organique et ayant une teneur en formaldéhyde libre inférieure à 0,1 % , ce procédé comportant :

- la condensation de formaldéhyde et de phénols en présence d'un catalyseur,

- la mise en dispersion aqueuse in situ de la résine formée, après addition d'une solution aqueuse d'un colloïde protecteur,

- une addition d'ammoniac, d'amine primaire ou secondaire aliphatique, ou de mono- ou de di-alcanolamine,

caractérisé en ce que l'on procède à l'addition de l'ammoniac, de l'amine primaire ou secondaire aliphatique, ou de la mono-ou di-alcanolamine lorsque la teneur en formaldéhyde libre évoluant au cours de la phase de condensation s'est stabilisée à une valeur constante.

2) Procédé selon la revendication 1 caractérisé en ce que l'ammoniac, l'amine primaire ou secondaire aliphatique, ou la mono- ou di-alcanolamine, sont introduits au cours de la condensation.

3) Procédé selon la revendication 1 caractérisé en ce que l'ammoniac l'amine primaire ou secondaire aliphatique, ou la mono- ou di-alcanolamine, sont introduits après la condensation et avant la mise en dispersion.

4) Procédé selon la revendication 1 caractérisé en ce que l'ammoniac l'amine primaire ou secondaire aliphatique, ou la mono- ou di-alcanolamine, sont introduits pendant la mise en dispersion.

5) Procédé selon la revendication 1 caractérisé en ce que l'ammoniac l'amine primaire ou secondaire aliphatique, ou la mono- ou di-alcanolamine, sont introduits après la mise en dispersion.

6) Procédé selon les revendications 1, 2, 3, 4 ou 5, caractérisé en ce que le rapport molaire entre l'ammoniac, l'amine primaire ou secondaire aliphatique, ou la mono- ou di-alcanolamine introduits, et le formaldéhyde libre est au moment de leur introduction compris entre 0,5 et 3.

7) Procédé selon les revendications 1, 2, 3, 4 ou 5, caractérisé en ce que le rapport molaire entre l'ammoniac, l'amine primaire ou secondaire aliphatique, ou la mono- ou di-alcanolamine introduits, et le formaldéhyde libre est au moment de leur introduction compris entre 0,7 et 0,9.

8) Procédé selon les revendications 1 à 7, caractérisé en ce que le catalyseur est choisi dans un groupe comprenant la soude et les amines tertiaires.

9) Procédé selon les revendications 1 à 7, caractérisé en ce que les phénols sont choisis dans le groupe constitué par le phénol ordinaire, les crésols, le nonylphénol, le paratertiobutyl-phénol, le paratertiooctylphénol, le bisphénol A, le bisphénol F, le paraphénylphénol.

10) Procédé selon les revendications 1 à 7, caractérisé en ce que le colloïde protecteur est un alcool polyvinylique.

11) Dispersions aqueuses stables de résols formophénoliques ne contenant pas de solvant organique des résols, et dont la teneur en formaldéhyde libre est inférieure à 0,1% .

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 8, no. 67 (C-216)[1504], 29 mars 1984; & JP-A-58 219 252 (SUMITOMO BAKELITE K.K.) 20-12-1983 * Résumé * --- | 1-11 | C 08 G 8/08 C 09 D 161/06 C 09 J 161/06 |
| X | PATENT ABSTRACTS OF JAPAN, vol. 4, no. 42 (C-5)[524], 3 avril 1980, page 10 C 5; & JP-A-55 13 739 (GUNEI KAGAKU KOGYO K.K.) 30-01-1980 * Résumé * --- | 1-11 | |
| A | US-A-4 373 062 (G.E. BROWN) * Exemple 4 * --- | 1 | |
| D,A | FR-A-2 189 457 (REICHHOLD-ALBERT-CHEMIE AG) * Exemple 1; revendications 1-2 * --- | 1-10 | |
| A | PATENT ABSTRACTS OF JAPAN, vol. 4, no. 106 (C-20)[588], 30 juillet 1980, page 8 C 20; & JP-A-55 66 914 (MATSUSHITA DENKO K.K.) 20-05-1980 * Résumé * --- | 1,8 | **DOMAINES TECHNIQUES RECHERCHES (Int. Cl.5)** C 08 G |
| D,A | US-A-3 823 103 (J. HARDING) * Exemples * --- | 1 | C 08 J C 08 L C 09 D C 09 J |
| D,A | DE-A-1 023 882 (FARVWERKE HOECHST AG) * Exemple 3 * --- | 10 | |
| A | US-A-4 238 379 (T.J. REINHART, Jr.) * Exemple 8 * --- | 1,10 | |
| D,A | US-A-4 124 554 (J.S. FRY) * Exemple 1 * --- -/- | 1,9-10 | |

Le présent rapport a été établi pour toutes les revendications

| Lieu de la recherche | Date d'achèvement de la recherche | Examinateur |
|---|---|---|
| LA HAYE | 12-01-1990 | PAULSSON R.L. |

**Office européen des brevets**

**RAPPORT DE RECHERCHE EUROPEENNE**

Numero de la demande

EP 89 40 3014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 7, no. 118 (C-167)[1263], 21 mai 1983; JP-A-58 37 020 (MATSUSHITA DENKO K.K.) 04-03-1983 * Résumé * --- | 1 | |
| D,A | US-A-1 976 433 (H.C. CHEETHAM) * Exemple 1 * ----- | 1 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 12-01-1990 | PAULSSON R.L. |